Europäisches Patentamt

(19) European Patent Office

Office européen des brevets

(11) Publication number: **0 130 337**
A2

(12) # EUROPEAN PATENT APPLICATION

(21) Application number: **84105748.2**

(22) Date of filing: **21.05.84**

(51) Int. Cl.⁴: **G 01 J 9/02**

(30) Priority: **30.06.83 US 509737**

(71) Applicant: **International Business Machines Corporation, Old Orchard Road, Armonk, N.Y. 10504 (US)**

(43) Date of publication of application: **09.01.85 Bulletin 85/2**

(72) Inventor: **Johnson, Mark, 197 Forest Drive, Mt Kisco New York 10549 (US)**

(74) Representative: **Lancaster, James Donald, IBM United Kingdom Patent Operations Hursley Park, Winchester, Hants, S021 2JN (GB)**

(84) Designated Contracting States: **DE FR GB**

(54) **Optical measurement apparatus.**

(57) An interferometer has an input optical fiber (80) which emits a divergent laser beam (64) across the interferometric cavity (52). At the far side of the cavity the beam is reflected by a retroreflective member (10) coated with microspheres or microprisms, to that the beam (66) converges and falls partly on the end face of an output optic fiber (82) without need for precise positioning of the member (10). Also some light from the fiber (80) is reflected by transparent plate into fiber (82), so that optical interference occurs and is measured by light detector (72).

OPTICAL MEASUREMENT APPARATUS

DESCRIPTION

Technical Field

This invention relates generally to optical measurement apparatus which includes one or more optical fibers and more particularly it relates to fiber optic interferometers.

Background Art

Many parameters (position, velocity, orientation, reflectivity, etc.) can be measured by causing a light beam to be affected in some particular way (modulated, deflected, reflected, attenuated, frequency shifted, phase shifted, etc.) in accordance with a desired parameter value and then sensing the effect the parameter value had on the light beam as a measurement of the parameter value desired. Since optical fibers facilitate the delivery of light to and from remote locations, the marriage of fiber optics and known optical measurement techniques promises a wide variety of remotely measuring optical probes having application in a wide variety of measurement areas.

One problem usually faced in combining fiber optics with a known optical measurement technique to produce a remote measurement probe is that once light has exited from a fiber and has travelled more than a few fiber diameters from the end of the fiber, it is very difficult to get a sufficient portion of the light back into the same (or another) fiber without requiring accurate alignment of optical components. The result is that there are either imposing optical alignment requirements which must be met, which is costly, or the returning signal level becomes so attenuated and/or noisy that the returned signal must be greatly amplified and/or specially processed to yield a useful measurement, which is also costly. It is this single problem of inexpensively getting light back into a fiber once it has travelled outside of a fiber for what actually amounts to only a small absolute distance, which has prevented more widespread development and use of fiber optic remote measurement apparatus.

It is an object of this invention to form fiber optic remote measurement apparatus where light from an optical fiber can travel outside of a fiber for hundreds of times a fiber diameter and a significant portion of this light still can be collected into the same (or another) optical fiber with only trivial alignment of optical components.

Another object is to provide a general method and arrangement for receiving a beam of light which has diverged from the end of an optical fiber to a beam diameter many times the diameter of the optical fiber end and for effectively focussing the diverged beam of light back onto the optical fiber end to a greatly reduced beam size on the order of only a few fiber diameters while requiring no more than trivial alignment of the focussing means with respect to the fiber.

Interferometry is a well known optical measurement technique, which may be used to make a highly precise measurement of a change in a path length or the velocity of a target. Since optical fibers facilitate the delivery of light to remote locations, the combination of fiber optics and interferometry in theory promises a remotely measuring optical probe which would have application in a wide variety of measurement areas. Unfortunately, the high accuracy of interferometry brings with it rather difficult alignment requirements which are made only more imposing and expensive to deal with at fiber optic dimensions. Conventional interferometric optical elements are much too cumbersome and bulky to be used with optical fibers.

In many of the known fiber optic interferometer configurations, the fiber itself (or a significant portion thereof) is included in the interferometer cavity. With these configurations, the enormous sensitivity of the device then operates to a disadvantage, since such an interferometer responds well not only to the perturbations intended to

0130337

be measured but equally well to undesirable and unavoidable temperature and pressure fluctuations which occur anywhere along the included fiber length. A poor signal-to-noise ratio typically results. Such a device is described, for example, by M. Imai, T. Ohashi, and Y. Ohtsuka in an article entitled "Fiber-optic Michelson interferometer using an optical power divider", Optics Letters, Vol. 5, pages 418-420 (1980).

To avoid the noise problem, some configurations have been proposed where the light is coupled out of the fiber into a measurement probe, the fiber being used only as a conduit for the light and not being included in the interferometric cavity. While these configurations are much less sensitive to environmental perturbations acting upon the fiber, an external interferometric cavity then must be formed and the interfering light beam must be recoupled back into a fiber, which ordinarily requires very costly and precise alignment of optical elements. Such configurations are described, for example, in an article by M. Martinelli entitled, "High-noise-rejection fiber-optic probe for interferometric applications", Optics Letters, Vol. 7, pages 189-191 (1982).

Light is scattered back into the light delivery optical fiber from a target (such as a particle) in an article by R. B. Dyott entitled, "The fibre-optic Doppler anemometer", Microwaves, Optics and Acoustics, Vol. 2, pages 13-18 (1978). While this configuration does not require accurate alignment of optical components at the interferometric cavity, it does suffer from very low optical efficiency, so the target must be very close to the fiber end. Except when this probe is being used to detect particles, the target still must be accurately positioned in that it must be located within a few fiber core diameters from the fiber end so that the scattered signal will be sufficiently strong without requiring expensive signal processing. Unfortunately, heretofore there has been no inexpensive way of forming a versatile interferometer cavity of reasonable size at the remote end of an optical fiber.

It is also an object of this invention to form a fiber optic interferometer which requires trivial alignment and where the measured target may be as much as one centimeter or more from the end of the fiber.

Another object of this invention is to form a versatile and inexpensive fiber optic interferometer where the measurement cavity is entirely at the end of the optical fiber.

Still another object is to form a fiber optic interferometer where the delivery fiber or fibers are not sensitive to thermal and pressure fluctuations.

It is also an object of this invention to form a fiber optic interferometer cavity having high optical efficiency and a detection resolution of at least one wavelength.

A further object is to form a fiber optic interferometer having a Doppler mode of operation where object velocity may be obtained with no calibration.

<div align="center">Brief Disclosure of The Invention</div>

As described hereinafter, retroreflective material such as SCOTCHLITE (a trademark of the 3M Company) or REFLEXITE (a trademark of the Reflexite Corporation) is positioned adjacent the remote end of an optical fiber to receive light which has diverged from the fiber end and to effectively refocus it back onto the fiber end. Retroreflective material reflects light such that each ray is precisely reversed in direction without regard to the angle of incidence of the ray (up to about 45° or more) and with very little divergence (1° or less). As a result, the light leaving the remote end of the fiber is not only reflected back onto the fiber end from which it originated but the beam is also automatically reconverged back to a diameter on the order of only a few fiber diameters. Furthermore, all this occurs without requiring that the retroreflector material and the fiber end be accurately positioned or oriented with respect to each other.

In a preferred embodiment, retroreflector material is used to form an external interferometric cavity at the remote end of an optical fiber. Independent of the precise orientation of the retroreflector material, a significant portion of the light leaving the remote end of the fiber is coupled back into either the same or a different fiber, where it interferes with light reflected from either the fiber end face itself or from an external surface. Detector apparatus monitors returning light and counts interference fringes as a measurement of change in the length of the interferometric cavity, from which distance or velocity is determined in conventional fashion. The length of the interferometric cavity between the retroreflective material and the fiber end face may be as much a centimeter or more while good signal strength and quality is retained.

### Brief Description Of The Drawings

Fig. 1 illustrates the general principle of this invention.

Figs. 2.1 and 2.2 show in graphical form the optical properties of typical retroreflective material.

Fig. 3 shows how light diverging from an optical fiber may be effectively refocussed back onto the end of the same optical fiber in accordance with this invention.

Fig. 4 illustrates how light diverging from one optical fiber may be coupled into another optical fiber.

Fig. 5 illustrates additional conventional focussing apparatus being used in combination with the focussing technique of this invention.

Fig. 6 illustrates a simple remote sensing arrangement in accordance with this invention.

Fig. 7 illustrates a fiber optic interferometer in accordance with this invention.

Fig. 8 illustrates another fiber optic interferometer in accordance with this invention where separate optical fibers are used to deliver and collect the light.

## Description Of The Preferred Embodiments

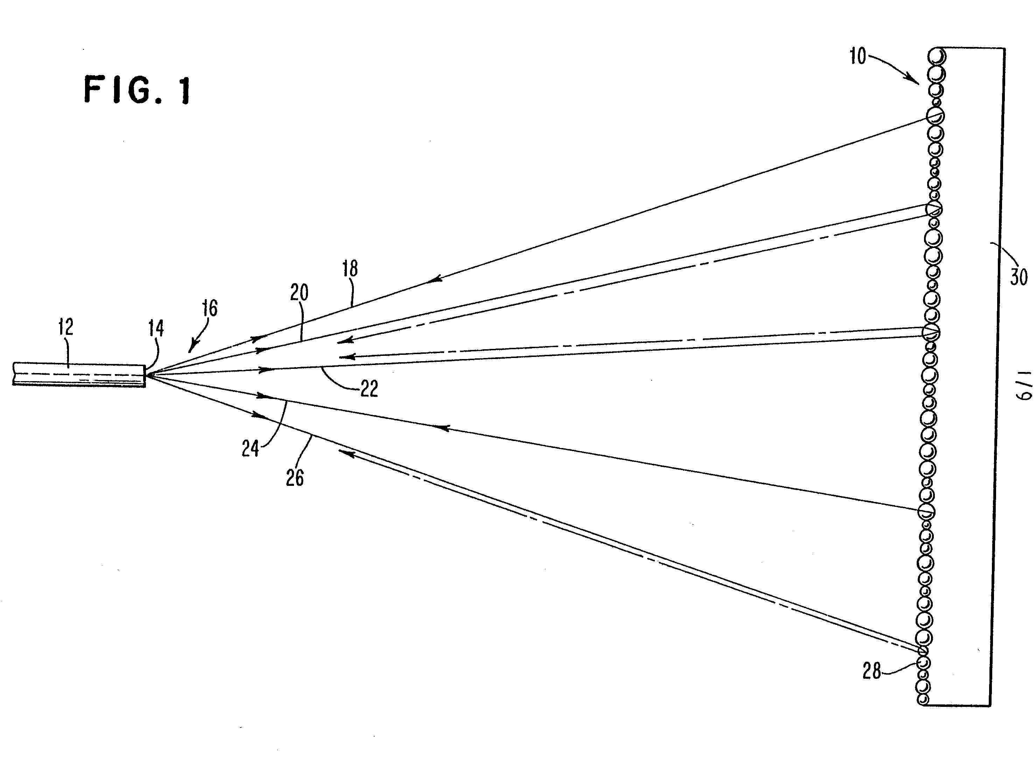

Referring now to Fig. 1, retroreflective material 10 is illustrated in greatly exaggerated scale. Optical fiber 12 carries a light beam which leaves the optical fiber at cleaved endface 14 in the form of a diverging light beam 16 having individual rays 18, 20, 22, 24 and 26. Diverging light beam 16 is intercepted by the retroreflective material 10, which for illustration here is physically represented as a two dimensional array (layer) of transparent spheres 28 of varying diameter carried by a supporting material 30. Retroreflective material of this type is sold by the 3M Company under the trademark "SCOTCHLITE". As illustrated, each light ray is internally reflected by a transparent sphere. Each reflected ray travels along a direction opposite to the incident direction of that ray. Unless an incident ray accidently strikes the center of a sphere (as did rays 18 and 24), the reflected ray will travel along a slightly displaced path due to the two light refractions. The amount and direction of the displacement depends upon the size and relative position of the individual sphere it strikes, but in no case is the displacement greater than the diameter of the sphere it strikes. Since the diameter of the spheres in SCOTCHLITE ranges from about 60 microns to 90 microns, the greatest lateral displacement of a ray is about 90 microns. As illustrated, although beam 16 diverges as it travels from fiber 12 to retroreflector 10, the reflected beam actually converges again as it travels back towards fiber 12. This occurs independently of the exact position and orientation of the retroreflector 10 with respect to the fiber 12. The fiber end face and the retroreflector are more than 1 mm apart.

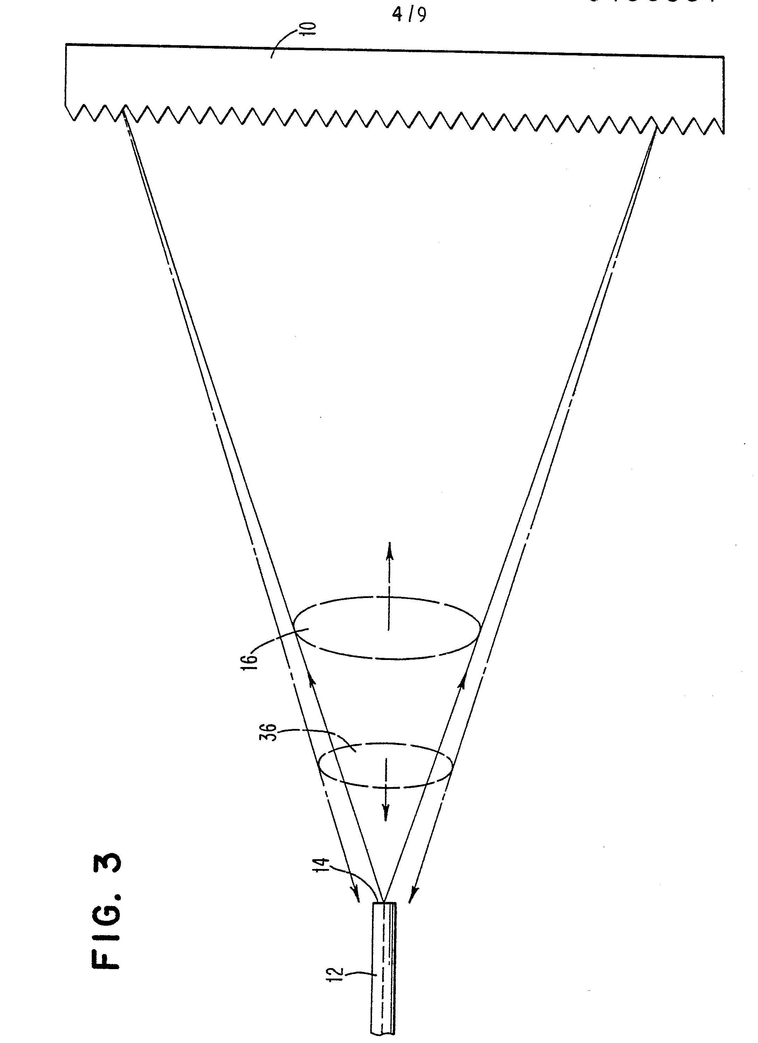

Another retroreflector material which may be used in practicing this invention is sold by the Reflexite Corporation under the trademark "REFLEXITE". REFLEXITE is a two dimensional array of microprisms carried by a supporting material. It has optical properties similar to SCOTCHLITE. Obviously other geometries could also be used to form a retroreflecting material. In Figs. 3-6, retroreflector material of the microprism type is schematically illustrated by a zig-zag surface, while in Figs 1, 7.1 and 8, retroreflector material of the sphere type is schematically illustrated by an array of circles. It should be understood that any type of retroreflective material may be used in any of the illustrated embodiments.

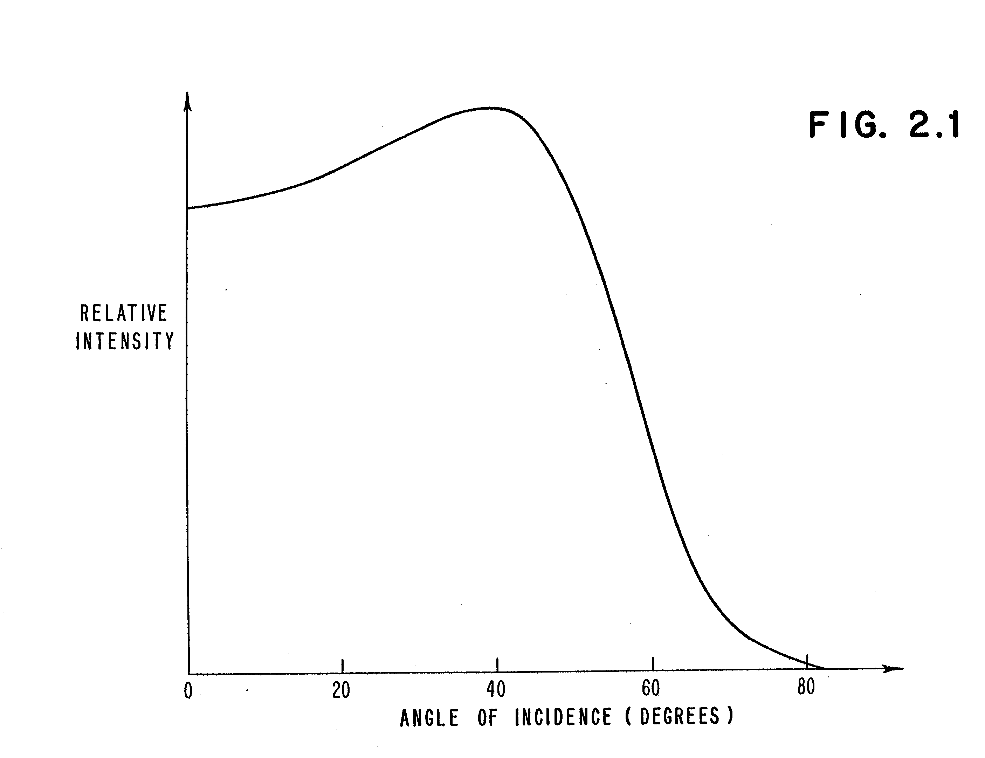

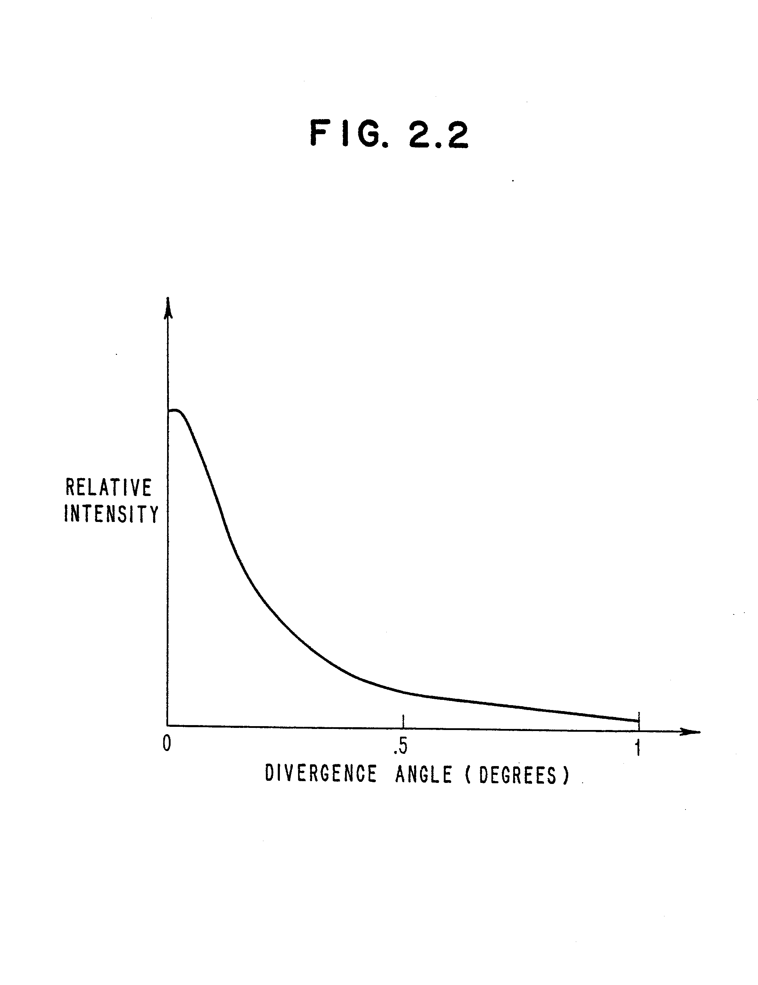

In Fig. 2.1, the relative intensity of a typical retroreflected ray is plotted as a function of angle of incidence. As shown by this graph, the intensity of the retroreflected light (i.e., the portion of the incident light reflected back in the opposite direction from which it came) does not begin to drop off significantly until the angle of incidence becomes 50 degrees or more.

Fig. 2.2 plots the relative intensity of a typical retroreflected ray as a function of divergence angle. It should be noted that a retroreflected ray typically has a very low divergence of less than one degree.

Fig. 3 illustrates the effect of this slight divergence. Beam 16 is not precisely reflected back upon itself but instead converges slightly less than it has diverged, due to the slight divergence imparted to each ray by the retroreflective material. As shown, the returning beam 36 converges to a spot size which is slightly larger than and within twice the cross sectional area of the original beam 16. As a result, not all of the light which leaves the fiber 12 will be refocused back into the fiber. Nevertheless, a surprisingly large portion of the returning light is concentrated upon endface 14, where it re-enters the fiber and travels back along the fiber in the opposite direction. The use of conventional reflective or scattering material instead of retroreflective material would cause the reflected light beam to continue to diverge rather than to converge along the reflected path, resulting in a returning light intensity in the fiber which is very many orders of magnitude weaker. Preferably in its parth from the fiber to the retrorefelctive material, the light beam has its cross sectional area at least doubled.

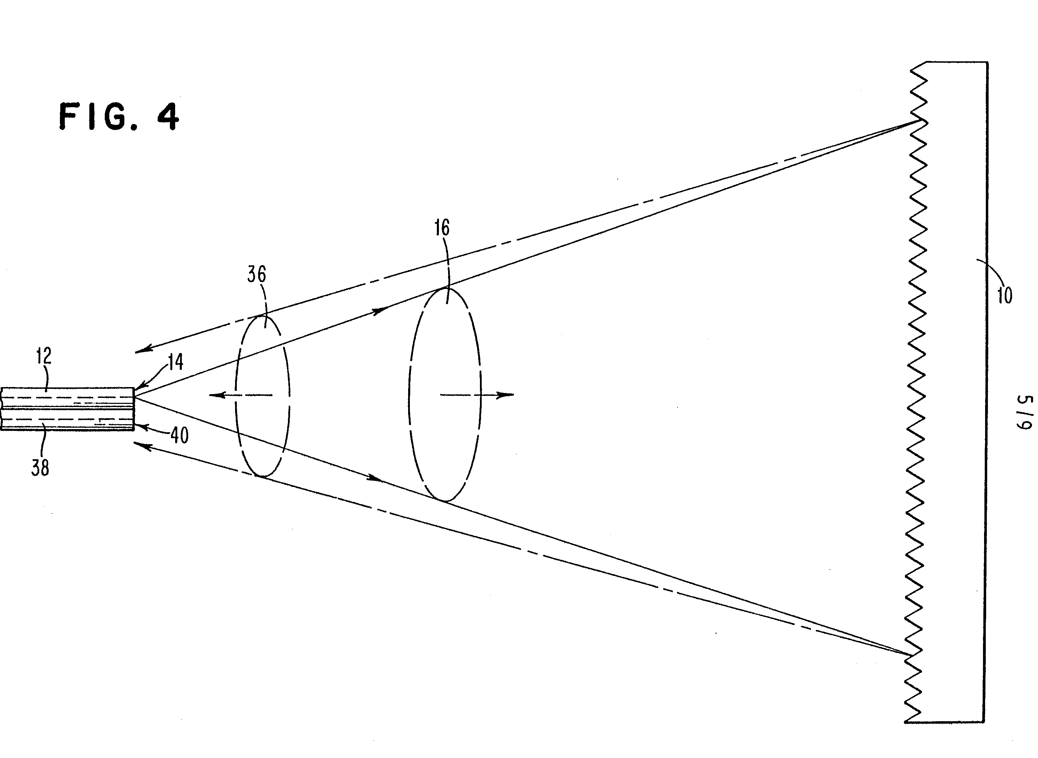

In Fig. 4, use is made of the fact that the reconverged light beam is larger than the original light beam. As illustrated, a second optical fiber 38 is placed side by side with fiber 12, so that the endface 40 of fiber 38 is also illuminated by the reconverging beam 36. As a result, retroreflected light originally launched by fiber 12 is received by fiber 38 without any precise positioning of the fibers with respect to the retroreflective material. Fiber 12 may be used as the input fiber while fiber 38 serves as an output fiber. Clearly, fiber 12 also receives some of the retroreflected light. Also additional fibers could be positioned along side the two illustrated. Obviously, any one of two or more such adjacent fibers could act as an input fiber. Any one or all of the fibers which receive retroreflected light could act as an output fiber. In a preferred embodiment, the input fiber is a single mode fiber, while the output fiber is a multimode fiber. With this arrangement, coherent laser light can be inserted at one end of the monomode fiber and will still be coherent when it is reaches the remote endface. A multimode fiber has a much larger core diameter than a single mode fiber, so that better collection efficiency will result from using a multimode fiber for the output fiber.

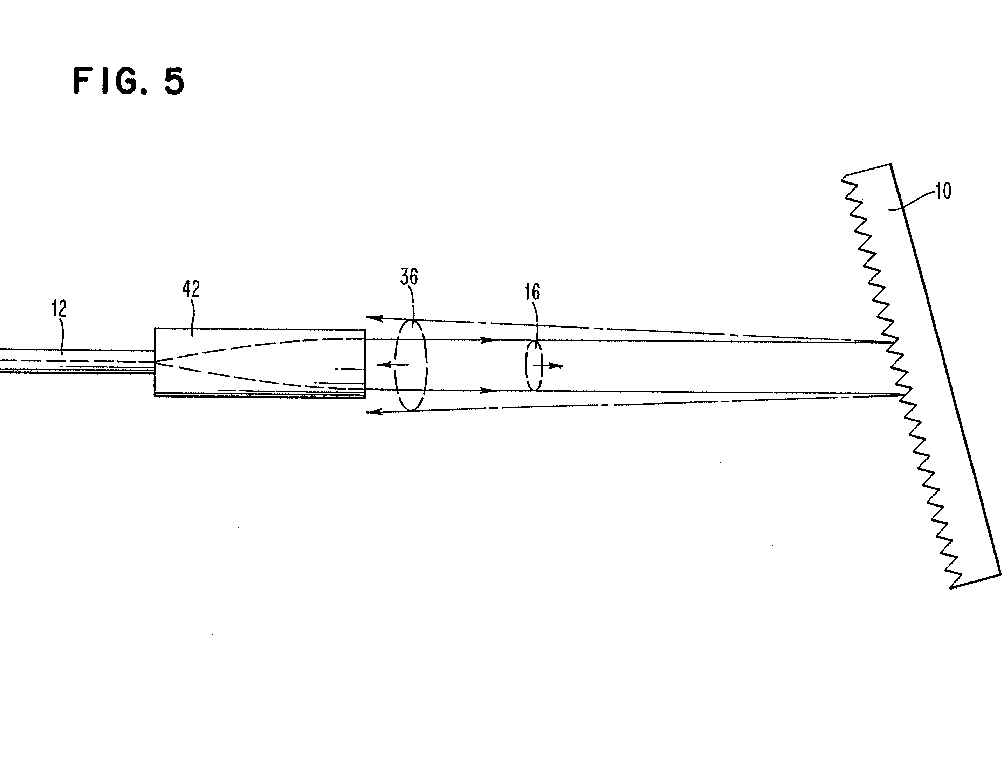

In Fig. 5 an additional focussing element has been added. A piece of graded refractive index fiber 42, commonly known as a SELFOC lens (SELFOC is a trademark of the Nippon Sheet Glass Co.), has been positioned at the end of fiber 12 to collimate the output light beam 16. The retroreflected light beam 36 diverges slightly and hits the end of the SELFOC lens, which reconverges it onto the endface of fiber 12. As illustrated dramatically by Fig. 5, the retroreflective material need not be positioned precisely with respect to the SELFOC lens. Even though the collimated beam 16 has a very small diameter (on the order of one millimeter), the retroreflector 10 may be positioned many centimeters away and can even be tilted without causing the returning small diameter beam 36 to miss the end of the SELFOC lens.

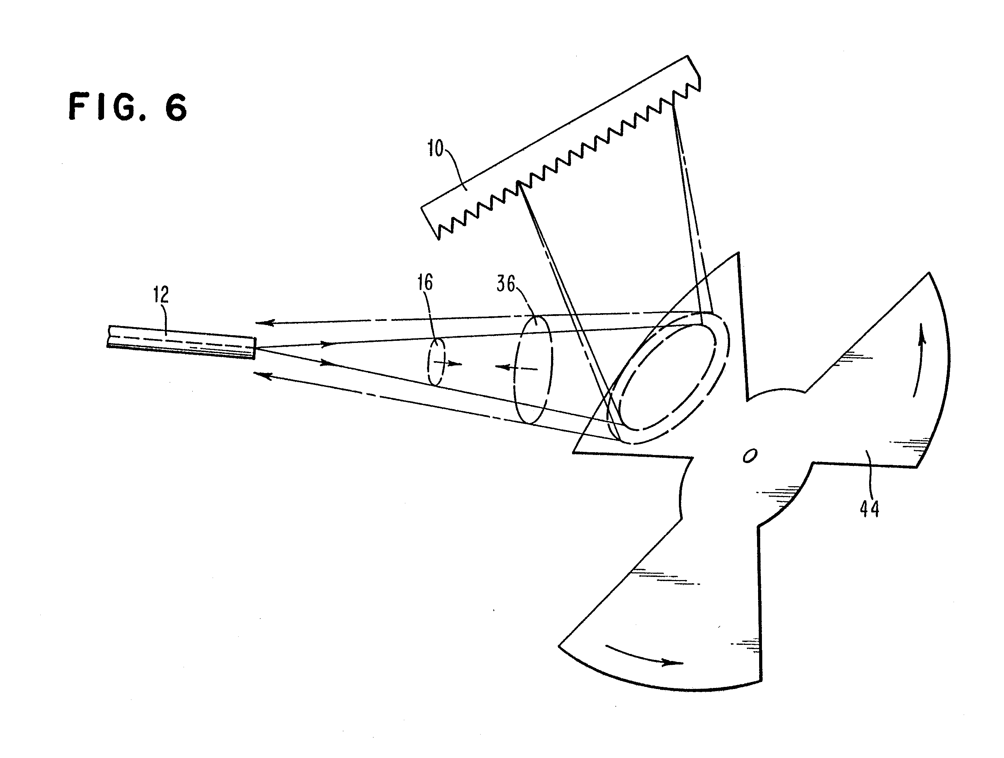

In Fig. 6 a simple remote sensing arrangement is shown. A diverging light beam 16 from fiber 12 is directed towards a reflecting shutter mechanism 44, illustrated as a three bladed fan. When a shutter intercepts the light beam 16 (as illustrated), the light beam is reflected by the shutter to a retroreflector material 10. The retroreflected beam 36 returns to the same shutter and is reflected thereby back to fiber 12. When the light beam 16 is not intercepted by a shutter (not shown), it fails to return to fiber 12. It should be noted that precise positionment and alignment of the optical system is obviated by the use of the retroreflective material. Not only is the relative position and tilt of the retroreflective material not critical, the relative position and tilt of the shutter mechanism 44 is also not critical so long as the beam still hits the shutter and retroreflective material as the shutter reaches its sensed position. It should be apparent, furthermore, that the shutter and retroreflector material do not even need to be planar. The shutter could have a conventional fan blade curvature, for example, so long as the light reflected from the blade hits retroreflector material. Additional optical components also could be added and none of the optical components would need to be fabricated to precise mechanical tolerances and none would require accurate positionment or tilting. Retroreflective material sends the returning beam back through the optical system along the same path it took to get to the retroreflective material, reconverging the light beam onto the emitting fiber and on any adjacent fibers with little regard to the exact positionment or alignment or precise geometry of the optical components, or to their aberrations.

It should be apparent that while going to the retroreflector material and while returning, the light beam passes through a region where it can be affected by a variable or parameter to be sensed. Among the parameters which could be sensed (in addition to the presence or absence of a reflective region as illustrated in Fig. 6) are: the presence or absence of a scattering medium in the path of the beam; the quantitative or relative optical density of the region through which the light beam has travelled; the absolute or relative distance the beam has travelled; and the quantitative or relative refractive index of the medium through which the beam has travelled (which can include electro-optic material or magneto-optic material or material which has an index which changes with temperature, electron density, etc.). In addition to measuring direct parameters such as these, variables not directly measurable with a light beam can be caused to vary a parameter which can be directly measured. For example, magnetostrictive and electrostrictive materials experience a change in dimension in response to magnetic and electric fields. The change in dimension can be optically measured in accordance with this invention as a measure of the magnetic or electric fields. Temperature and mechanical stress also changes physical dimensions. A change in a physical dimension can be measured in accordance with this invention as a measure of stress or temperature. The use of retroreflective material allows virtually any known optical measurement techniques to be combined with fiber optics without requiring precise positionment or alignment of optical components.

A particularly useful environment for applying the principles of this invention is in the field of fiber optic interferometers. It has been an especially surprising discovery that retroreflector material can be used even in applications which traditionally require coherent light, such as interferometry. When a coherent beam is retroreflected by retroreflector material, the coherent wave front of the beam is obviously broken up by the many individual tiny retroreflective elements (which typically also have non-uniform size), resulting in a returning beam which is not spatially coherent. However, when the retroreflected beam re-enters a fiber the individually retroreflected portions again are combined. Surprisingly, the recombined beam acts as if it were again spatially coherent, since it interferes with a coherent second beam as if it were also coherent.

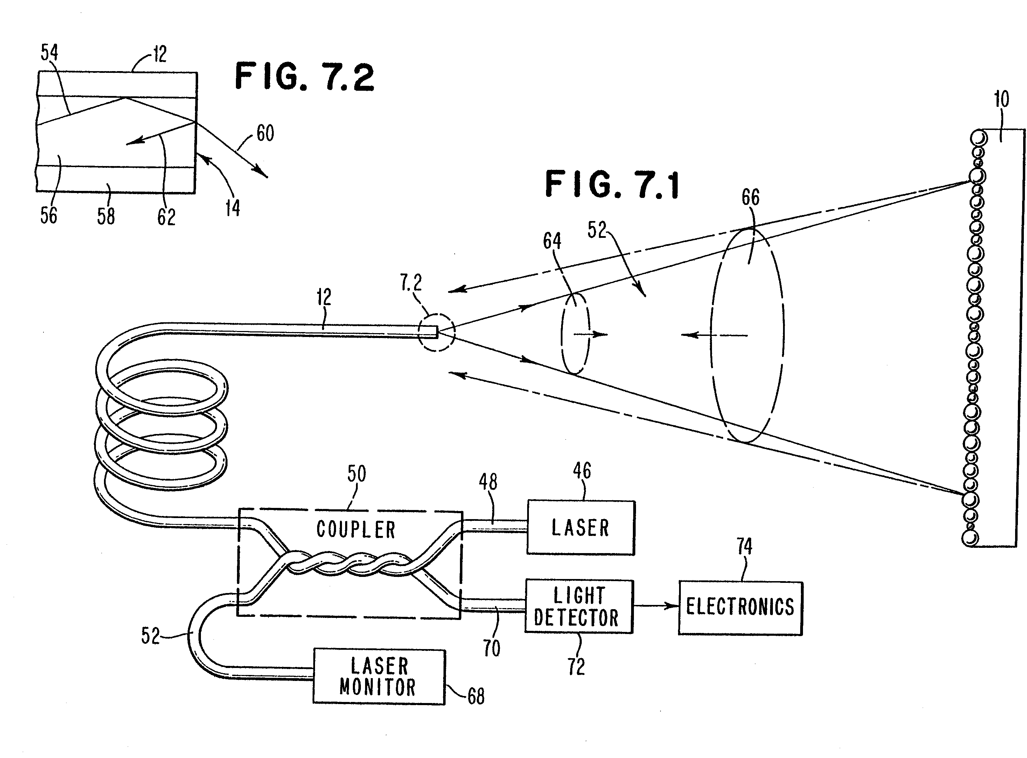

Since an interferometer may be used to precisely measure a distance or change in a distance, a fiber optic interferometer probe can be used to measure any parameter which can cause a physical distance change. Figs. 7.1 and 7.2 illustrate a simple fiber optic interferometer in accordance with this invention. Coherent light from laser 46 is coupled via fiber 48, coupler 50, and fiber 12 to an interferometric cavity 52 located between endface 14 of fiber 12 and retroreflective material 10. Fig. 7.2 is an enlargement of the region around endface 14 of fiber 12. A typical coherent ray 54 is shown reflecting from the interface between the core 56 and cladding 58 of fiber 12. Upon striking endface 14, ray 54 is divided into a transmitted portion 60 and a reflected portion 62. Beam 64 (Fig. 7.1) is the sum of many such rays 60 and normally diverges, as shown, until intercepted by retroreflector material 10. The retroreflected beam (now labelled 66) effectively refocusses the coherent beam back onto endface 14 where part of the retroreflected beam re-enters fiber 12 and interferes with the portion of the beam reflected by endface 14 (the sum of many ray portions 62). If the retroreflector material is moving away from or toward fiber 14, then the retroreflected beam 66 will have a sightly different frequency than the beam reflected from endface 14 and an optical beat signal will result which is a direct measure of the relative velocity of the retroreflector material along the axis of the projected and retroreflected beam. When operating in this fashion, the interferometer is typically called an optical Doppler interferometer.

Another mode of operation involves the counting of interference fringes. As the distance between the fiber endface 14 and the retroreflector changes, the relative phase of the interfering beams gradually changes from destructive interference to constructive interference and then back to destructive interference again, etc. Each time the interfering beams are in phase (constructive interference) the optical signal returning along the fiber has a maximum intensity and each time the interfering beams are out of phase (destructive interference) the optical signal returning along the fiber has a minimum intensity. By detecting maxima

0130337

(fringes) and counting them, the distance by which the retroreflector has moved relative to the fiber endface can be very accurately measured.

Coupler 50 is shown as a twisted pair of coupled (i.e. fused) fibers. Any other type of light coupler may be used instead. Light source 46 is monitored via fiber 48, coupler 50, fiber 52 and laser monitor 68. The interfering beams return via fiber 12 to coupler 50 and are detected via fiber 70 by light detector 72 and electronics 74 responsive thereto in a manner already well understood and which forms no part of this invention.

A particularly advantageous feature of this invention is that the precise orientation of the retroreflector material 10 is not particularly important. It may be spaced from the end of the fiber by many fiber core diameters. Even without additional focussing, a spacing of as much as 1000 fiber diameters will result in an optical signal which can be detected without any serious problem.

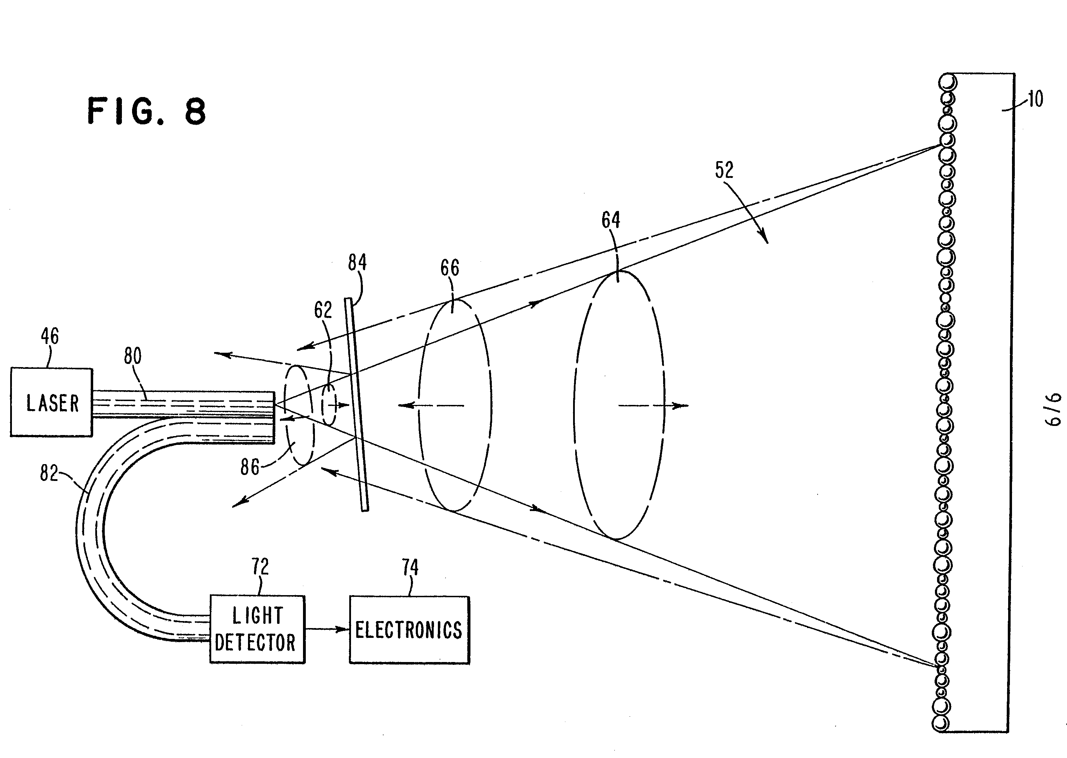

In Fig. 8 another fiber optic interferometer probe is illustrated. This time a single mode fiber 80 brings coherent light from laser 46 to the interferometric cavity 52 and a multimode fiber 82 collects the interfering beams and brings the optical interference signal to the light detector 72 and electronics 74. Use of a single mode fiber to bring the coherent light to the interferometric cavity has the advantage that the coherence of the light is not adversely affected by multimode phase dispersion in the fiber. Use of a multimode fiber as the collection fiber results in better collection efficiency and a stronger returning signal for the detector 72 and electronics 74. The use of a separate fiber for collecting and returning the interference signal does however require that a reference optical signal be channelled into the return fiber. While there are many ways in which this can be done, the preferred way is to position a thin transparent plate 84 in front of and slightly spaced from the fibers, as shown. Part of the emitted light beam 64 is reflected by transparent plate 84 and forms a reference beam 86, a portion of which strikes endface 88 of fiber 82. The remainder (and most) of light beam 64 is transmitted by plate 84 and reaches the retroreflector. The retroreflected beam 66 is also partly reflected by the plate 84, but most of the retroreflected beam is transmitted through the plate and illuminates the fiber endfaces. Part of the retroreflected light enters fiber 82 and interferes with the part of the reference beam which has entered fiber 82.

14        0130337

CLAIMS

1. Optical measurement apparatus, comprising:

a sensing region across which a parameter is to be measured from the effect said parameter has upon light traversing said region;

an optical fiber positioned at one side of said sensing region for projecting a light beam from an endface of said fiber across said sensing region; and

retroreflective material positioned at an opposite side of said sensing region for receiving said light beam after it has traversed across said sensing region and for retroreflecting said received light beam in the opposite direction back across said sensing region towards said fiber endface,

whereby said retroreflected light beam illuminates said optical fiber without accurately positioning or tilting said retroreflective material with respect to said optical fiber .

2. Apparatus as defined in Claim 1 wherein said optical fiber acts both to project light into said sensing region and to sense retroreflected light illuminating said optical fiber .

3. Apparatus as defined in Claim 1 or 2 wherein said parameter to be measured is a change in distance between said fiber and said retroreflector material, said sensing region acting as an interferometer cavity.

4. Apparatus as defined in Claim 1 or 2 wherein said parameter to be measured is the relative velocity of said retroreflector material away from or toward said optical fiber , said sensing region acting as a Doppler interferometer cavity.

0130337

5.  Apparatus as defined in Claim 1 wherein the cross sectional area of
    said light beam increases as it travels from said fiber to said
    retroreflective material and decreases as it travels back from said
    retroreflective material to said fiber.

6.  Apparatus as defined in Claim 5 wherein the cross sectional area of
    said light beam when it reaches said fiber after retroreflection
    from said retroreflective material is within twice the cross
    sectional area of said fiber.

7.  Apparatus as defined in Claim 1 wherein said optical fiber acts as
    an input optical fiber and further comprising at a position adjacent
    said input acting optical fiber, an output acting optical fiber
    receiving a portion of said light beam after retroreflection back
    across said sensing region.

8.  Apparatus as defined in Claim 1, and further comprising at least one
    focussing optical element positioned between said optical fiber and
    said retroreflecting material, whereby said retroreflected light
    beam illuminates said fiber  without high precision fabrication of
    or accurate positionment of said at least one additional optical
    element.

9.  Apparatus as defined in Claim 8 wherein said focussing element is a
    piece of graded index optical fiber positioned adjacent said  of
    said fiber.

10. Apparatus as defined in Claim 1 wherein said optical fiber acts as
    an input optical fiber for projecting an optical beam across said
    sensing region and further comprising:

    at a position adjacent said input acting optical fiber, an
    additional optical fiber acting as an output  optical fiber for
    receiving a portion of said retroreflected light beam; and

0130337

a transparent plate for directly reflecting part of the light
projected from said input acting optical fiber onto the  of said
output acting optical fiber for interference with said received
portion of said retroreflected light beam.


11. An interferometer, comprising:


an interferometer cavity;


retroreflective material positioned at one side of said cavity for
receiving coherent light which has traversed said cavity in one
direction and for retroreflecting said received light back across
said cavity in the opposite direction;


at least one optical fiber positioned at an opposite side of said
cavity for projecting coherent light across said cavity to said
retroreflective material and for receiving light retroreflected back
across said cavity from said retroreflective material,


said retroreflective material and said at least one optical fiber
not requiring precise positioning or tilting with respect to each
other.


12. An interferometer as defined in Claim 11 wherein said at least one
optical fiber comprises a single mode fiber for delivering coherent
light to said cavity and a multimode fiber side by side with said
single mode fiber for collecting retroreflected light from said
cavity, said interferometer further comprising means for diverting
to said multimode fiber a portion of said coherent light delivered
by said single mode fiber for interference with collected
retroreflected light.

FIG. 1

0130337

FIG. 2.1

RELATIVE INTENSITY

ANGLE OF INCIDENCE ( DEGREES )

# FIG. 2.2

RELATIVE
INTENSITY

0          .5          1

DIVERGENCE ANGLE ( DEGREES )

# FIG. 3

4/9

FIG. 4

# FIG. 5

0130337

FIG. 6

**FIG. 7.2**

54

12

60

56    58    62    14

**FIG. 7.1**

66

64    52

7.2

12

10

8 / 9

50

48    46

COUPLER    LASER

52

74

LIGHT
DETECTOR    ELECTRONICS

70    72

LASER
MONITOR    68

0130337

FIG. 8

LASER — 46

80

82

LIGHT DETECTOR — 72

ELECTRONICS — 74

62

84

86

66

64

52

10

9/9

0130337